# FASCICULE DE BREVET EUROPEEN

(11) **EP 1 234 754 B1**
(45) Date de publication et mention de la délivrance du brevet: **21.12.2005**
(21) Numéro de dépôt: 02290288.6
(22) Date de dépôt: 06.02.2002
(51) Int. Cl.: B62D 47/00, B60R 5/04, B60P 3/42

(54) **Véhicule automobile de type break transformable en un véhicule à benne ouverte vers le haut**
Personenkraftwagen , umwandelbar von einem Kombi in einem Pickup
Motor vehicle , transformable from a estate car type into a pickup type

(30) Priorité: 26.02.2001 FR 0102596
(43) Date de publication de la demande: 28.08.2002
(73) Titulaire: Peugeot Citroen Automobiles SA, 92200 Neuilly sur Seine (FR)
(72) Inventeur: Bertrand-Belanger, Pascal, 92310 Sevres (FR)
(74) Mandataire: Bouget, Lucien

(56) Documents cités:
- FR-E- 79 254
- NL-C- 32 671
- US-A- 3 169 792
- US-A- 4 261 613
- US-A- 4 712 827

## Description

L'invention concerne un véhicule automobile de type break transformable en un véhicule à benne ouverte vers le haut, appelé pick-up. Un exemple de ces véhicules est donné par le document FR-A-2 748 241 qui montre toutes les caractéristiques du préambule de la revendication 1.

Les véhicules automobiles de type break comportent un habitacle ayant une partie avant contenant le poste de conduite du véhicule et au moins un siège avant et une partie arrière contenant au moins un siège arrière rabattable de manière à constituer une partie d'un plancher plat s'étendant sur toute la partie arrière de l'habitacle du véhicule dans la position rabattue du siège arrière. L'habitacle comporte, à son extrémité arrière, un ouvrant appelé hayon qui est articulé à sa partie supérieure autour d'un axe suivant la direction transversale du véhicule automobile, de manière que le hayon puisse être déplacé entre une position abaissée de fermeture et une position relevée d'ouverture donnant accès, par l'arrière du véhicule, à la partie arrière de l'habitacle. Après avoir rabattu le ou les sièges arrière du véhicule, on dispose donc d'un volume de transport correspondant à l'ensemble de la partie arrière de l'habitacle accessible par l'ouverture dégagée lors de l'ouverture du hayon.

Les véhicules automobiles de type break permettent donc de transporter des charges volumineuses qui sont introduites dans le véhicule par une ouverture permettant d'engager les objets transportés dans la direction longitudinale du véhicule. Toutefois, l'habitacle des véhicules de type break est fermé par un toit, de sorte que l'espace de rangement et de transport à l'intérieur du break est limité vers le haut.

En outre, les breaks comportent généralement deux parois délimitant latéralement la partie arrière de l'habitacle qui comportent des portes latérales arrière du break équipées de vitres dans leur partie supérieure et deux parties de carrosserie fixes ou custodes qui sont également équipées de vitres dans leur partie supérieure. Les vitres des parties supérieures des parties latérales du break, lorsque celui-ci est utilisé pour le transport d'objets volumineux, risquent d'être cassées, lors du chargement ou pendant le transport des objets volumineux et éventuellement pesants.

Enfin, le confort du conducteur et des passagers avant du break est réduit par le fait que l'habitacle peut être à la fois utilisé pour le transport d'objets et occupé par le conducteur et les passagers.

On connaît d'autre part des véhicules automobiles à benne ouverte vers le haut appelés pick-up qui comportent, à l'arrière d'une cabine constituée par la partie antérieure de l'habitacle du véhicule automobile renfermant le poste de conduite, la benne ouverte vers le haut de forme générale parallélépipédique. La benne ouverte du pick-up comporte un plancher, deux parois latérales dans la direction longitudinale du véhicule et une paroi d'extrémité arrière ouvrante située à l'opposé de la cabine. De tels véhicules présentent des avantages en ce qui concerne leur capacité de chargement par rapport à une berline classique ou même par rapport à un break, puisque le niveau de chargement de la benne est pratiquement illimité du fait de l'absence d'un toit recouvrant la benne. Toutefois, les véhicules pick-up ne peuvent être utilisés qu'à des fins utilitaires et seulement par le conducteur et éventuellement un passager, ce qui limite leur intérêt dans le cas de leur utilisation par des particuliers. En outre, ces véhicules sont difficilement utilisables sur de longs parcours routiers ou autoroutiers.

Dans le cas d'une utilisation d'un véhicule automobile aussi bien pour le transport de charges que pour le transport de passagers, il peut paraître intéressant de cumuler les avantages des breaks et des pick-up.

Jusqu'ici, on ne connaissait pas de véhicules automobiles permettant de cumuler ces avantages dans des conditions pratiques et économiques.

Le but de l'invention est donc de proposer un véhicule automobile de type break transformable en un véhicule à benne ouverte vers le haut, appelé pick-up, et comportant un habitacle ayant une partie avant contenant un poste de conduite et au moins un siège avant, une partie arrière comportant au moins un siège arrière rabattable de manière à constituer un plancher plat dans la partie arrière de l'habitacle dans sa position rabattue et délimitée par deux parois latérales et un hayon ouvrant à sa partie postérieure ainsi qu'un toit couvrant l'ensemble de l'habitacle, ce véhicule automobile pouvant passer facilement d'une configuration de type break à une configuration de type pick-up, de manière à constituer un véhicule polyvalent extrêmement économique.

Dans ce but, le toit de l'habitacle est constitué d'une partie avant fixe couvrant la partie avant de l'habitacle et d'une partie arrière mobile recouvrant la partie arrière de l'habitacle, à l'arrière du siège avant montée pivotante par une extrémité antérieure autour d'un axe horizontal de direction transversale situé à l'aplomb d'une partie arrière du siège avant, entre une position sensiblement horizontale dans la continuité de la partie avant dans une première configuration du véhicule et une position sensiblement verticale, à l'arrière du siège avant, de manière à séparer la partie avant de l'habitacle constituant une cabine dans une seconde configuration du véhicule automobile à benne ouverte, de la partie arrière du véhicule, dans sa seconde configuration, et
- une partie supérieure du hayon comportant une vitre arrière est escamotable de manière coulissante à l'intérieur d'une partie inférieure du hayon, de façon à constituer une paroi arrière de la benne ouverte vers le haut du véhicule dans sa seconde configuration.

Afin de bien faire comprendre l'invention, on va décrire, à titre d'exemple, en se référant aux figures jointes en annexe, un mode de réalisation d'un véhicule de type break suivant l'invention transformable en véhicule de type pick-up.
La figure 1 est une vue en perspective, de trois-quarts arrière, d'un véhicule automobile dans sa première configuration ou configuration break.
La figure 2 est une vue en perspective, de trois-quarts arrière, du véhicule, dans sa seconde configuration à benne ouverte vers le haut.
La figure 3 est une vue en perspective, de trois-quarts arrière et du dessus, du véhicule dans sa seconde configuration et dans une variante de réalisation à benne extensible.

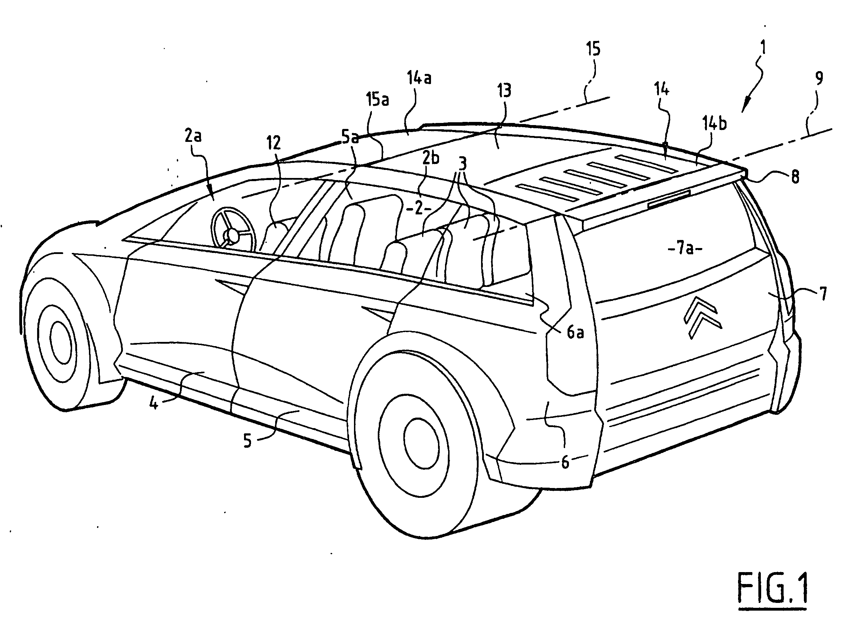

Sur la figure 1, on voit un véhicule suivant l'invention de type break désigné de manière générale par le repère 1.

Le véhicule comporte une carrosserie délimitant un habitacle 2 dont la partie avant 2a renferme un poste de conduite du véhicule automobile et au moins un siège avant utilisé par le conducteur du véhicule. Généralement, le véhicule comporte deux sièges avant, un siège de passager étant disposé à la droite du siège du conducteur.

L'habitacle 2 comporte de plus une partie arrière 2b dans laquelle est disposé au moins un siège ou une banquette pour un passager et par exemple, dans le mode de réalisation représenté, trois sièges de passagers 3 alignés suivant la direction transversale du véhicule automobile.

Ces sièges de véhicule sont réalisés de manière à constituer, dans une position totalement rabattue, une partie d'un plancher totalement plat de la partie arrière 2b du véhicule automobile qui comporte, à l'arrière des sièges 3, un coffre arrière ayant un plancher fixe. Chacun des sièges 3 comporte un dossier qui peut être rabattu sur l'assise du siège, de manière que la surface arrière du dossier constitue une partie de la surface du plancher plat de l'habitacle du véhicule automobile dans une position de transport d'objets volumineux.

L'habitacle 2 du véhicule automobile est délimité latéralement, sur chacun de ses côtés, à l'avant, par une porte avant 4 du véhicule et, à l'arrière, par une porte arrière 5 et une custode 6.

La porte arrière 5 comporte une vitre de porte arrière 5a dans sa partie supérieure et de même la custode 6 comporte une vitre 6a de custode dans sa partie supérieure.

Le véhicule automobile 1 comporte, à sa partie arrière, un hayon 7 constituant une cinquième porte du véhicule automobile montée pivotante sur la carrosserie autour d'un axe d'articulation horizontal de direction transversale 9, de manière que le hayon, en position relevée, donne accès à la partie arrière 2b de l'habitacle du véhicule automobile. Lorsque les sièges arrière 3 sont rabattus, on peut donc charger, par l'arrière du véhicule automobile, après ouverture du hayon 7, des objets volumineux qui sont transportés dans la partie arrière de l'habitacle 2b du véhicule automobile, à l'arrière des dossiers des sièges avant 12.

Le hayon 7 comporte, dans sa partie supérieure, une vitre 7a constituant la lunette arrière du véhicule de type break et, éventuellement, un becquet 8 fixé suivant le bord horizontal supérieur de la lunette arrière 7a.

Dans un mode de réalisation préférentiel représenté sur la figure 1, le toit 14 du véhicule automobile recouvrant l'ensemble de l'habitacle 2 comporte, dans sa partie avant, au-dessus de la partie avant 2a de l'habitacle, une partie 14a opaque qui peut être constituée par une tôle et, à sa partie arrière, au-dessus du coffre du véhicule automobile, à l'arrière des dossiers des sièges 3, une seconde partie opaque 14b qui peut être constituée également par une tôle. Entre les parties opaques 14a et 14b, le toit 14 du véhicule automobile comporte une vitre 13 permettant à la lumière du jour de parvenir par le haut dans la partie arrière 2b de l'habitacle du véhicule automobile.

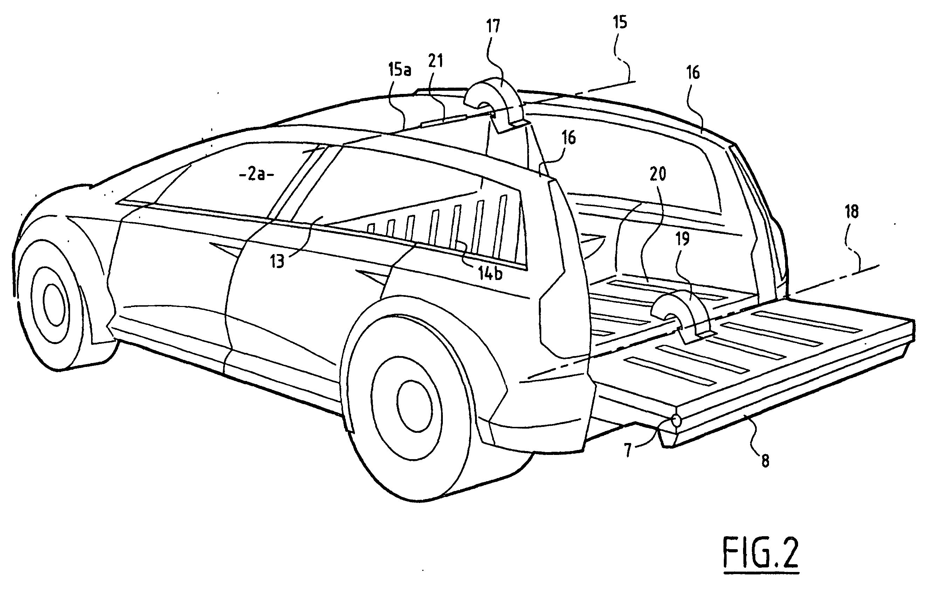

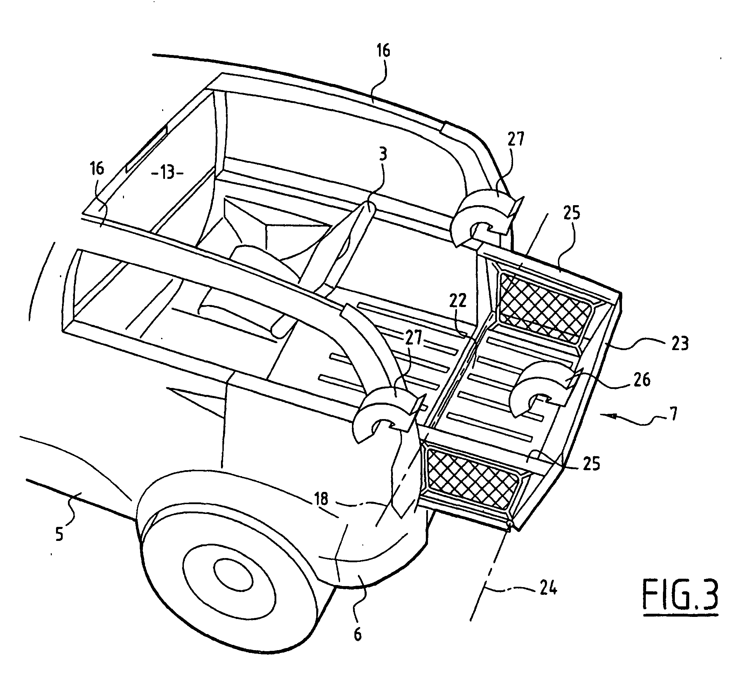

Le véhicule de type break suivant l'invention transformable en véhicule à benne ouverte, comme représenté sur les figures 2 et 3, est réalisé de manière que la partie arrière du toit recouvrant la partie arrière 2b de l'habitacle du véhicule automobile et comportant la vitre 13 et la seconde paroi opaque 14b soit montée de manière articulée, par le bord antérieur de la vitre 13, autour d'un axe de direction transversale 15 disposé à l'aplomb de la partie arrière des sièges avant 12 du véhicule automobile. L'axe 15 représenté sur la figure 2 peut être matérialisé par des éléments d'articulation fixés sur le bord antérieur transversal 15a de la vitre 13. Les éléments d'articulation de la vitre 13 coopérent avec des éléments d'articulation portés par la carrosserie du véhicule automobile, par exemple suivant le bord arrière de la première paroi opaque 14a du toit et suivant des parties de carrosserie 16 de direction longitudinale constituant la partie supérieure des parois latérales du véhicule automobile pour permettre le pivotement de la partie mobile 13, 14b du toit 14.

Comme représenté par la flèche 17 sur la figure 2, la partie du toit 14 comportant la vitre 13 et la seconde paroi opaque 14b peut être rabattue vers l'intérieur du véhicule automobile, de manière à venir se placer derrière les sièges avant 12 du véhicule automobile. La vitre 13 constitue alors la partie supérieure d'une paroi verticale dont la seconde paroi opaque 14b constitue la partie inférieure. La seconde paroi 14b du toit 14 peut être munie, à sa partie inférieure, d'éléments de verrouillage de la partie de toit rabattue vers l'intérieur du véhicule automobile, dans une position verticale. Ces éléments de verrouillage coopèrent par exemple avec des éléments correspondants prévus sur le plancher ou dans les parois latérales du véhicule automobile. Dans sa position rabattue, la partie de toit pivotante 13, 14b peut être en appui contre une partie au moins de la surface arrière des dossiers des sièges avant 12 du véhicule automobile.

Le rabattement de la partie pivotante du toit 13, 14b permet de séparer la partie avant 2a de l'habitacle du véhicule automobile constituant une cabine, de la partie arrière 2b, la vitre 13 constituant alors la lunette arrière de la cabine du véhicule automobile dans sa seconde configuration. Dans la seconde configuration, la partie arrière 2b de l'habitacle du véhicule automobile constitue une benne ouverte vers le haut, délimitée latéralement par les parties arrière des parois latérales du véhicule automobile et, à l'arrière, par la partie inférieure du hayon 7 dans laquelle sont escamotées, par coulissement, la lunette arrière 7a et au moins une partie du becquet 8.

Pour cela, la partie inférieure du hayon 7 est réalisée de manière à comporter un logement interne pour recevoir la lunette arrière 7a dont la hauteur est légèrement inférieure à la hauteur de la partie inférieure du hayon 7.

On réalise un déverrouillage des éléments d'articulation permettant le montage pivotant du hayon autour de l'axe 9 et on provoque le coulissement vers le bas de la lunette 7a et du becquet 8 par exemple par poussée sur le becquet 8, de manière à faire glisser la lunette 7a à l'intérieur de la partie inférieure 7 du hayon. Pendant son déplacement en coulissement, la lunette 7a peut être guidée par des glissières sur les parties latérales de la carrosserie.

On réalise la mise en service de moyens de pivotement coopérant avec la partie inférieure du hayon pour permettre au hayon de pivoter autour d'un axe 18 de direction transversale, situé sensiblement au niveau du plancher de la partie arrière du véhicule automobile, après escamotage de la lunette arrière et du becquet 8, comme représenté par la flèche 19 sur la figure 2.

On escamote par coulissement la vitre 5a de la portière arrière 5, à l'intérieur d'une partie inférieure de la portière et de même on escamote la vitre 6a de la custode à l'intérieur de la partie inférieure de la custode par coulissement, sur chacun des côtés latéraux du véhicule automobile.

On rabat les sièges arrière 3 du véhicule automobile dans une position telle que les dossiers des sièges 3 forment une partie horizontale du plancher 20 du véhicule automobile dans le prolongement de la partie arrière du plancher au niveau du coffre arrière du véhicule automobile.

Le véhicule automobile est alors dans sa seconde configuration de type pick-up représentée sur la figure 2.

Le véhicule automobile représenté sur les figures 1 et 2 ne comporte pas de montant vertical entre la porte arrière 5 et la custode 6, sur chacun des côtés du véhicule automobile, de sorte que chacune des parois latérales de la partie arrière du véhicule automobile constituant la benne ouverte du véhicule dans sa seconde configuration comporte uniquement la partie inférieure d'une porte arrière 5 et de la custode 6, les éléments longitudinaux 16 de la carrosserie et deux montants verticaux reliant, à l'arrière du véhicule, la custode aux éléments de carrosserie longitudinaux 16.

Le véhicule automobile, dans sa seconde configuration représentée sur la figure 2, ou configuration en pick-up, comporte donc une benne arrière ouverte vers le haut et accessible à l'arrière par une porte rabattable vers l'extérieur constituée par la partie inférieure du hayon 7.

Le chargement de la benne ouverte vers le haut est ainsi facilité et des objets volumineux ou pesants peuvent être chargés dans une position où ils dépassent le niveau du toit du véhicule automobile. Ces objets volumineux ou pesants ne sont pas susceptibles de détériorer les vitres de la partie arrière du véhicule automobile qui sont escamotées dans des parties de carrosserie.

En outre, la partie avant 2a de l'habitacle du véhicule constituant la cabine du véhicule sous sa forme pick-up est totalement séparée de la benne par la partie mobile 13, 14b du toit 14 dans sa position rabattue.

On peut prévoir un troisième feu de stop 21 du véhicule automobile, suivant la partie centrale du bord antérieur supérieur de la partie mobile 13, 14b du toit 14, de manière que le feu de stop 21 soit parfaitement visible depuis une position à l'arrière du véhicule automobile.

Comme il est visible sur la figure 3, on peut prévoir une variante de réalisation de manière à obtenir, dans la seconde configuration du véhicule (configuration de type pick-up), une benne de capacité accrue.

Pour cela, la partie inférieure du hayon 7 comporte deux éléments de paroi plans 22 et 23 qui sont articulés l'un sur l'autre par l'intermédiaire d'un axe d'articulation transversal 24, de manière à pouvoir être déplacés l'un par rapport à l'autre, comme représenté par la flèche 26, entre une position rabattue l'un contre l'autre et une position dans laquelle l'élément de paroi 23 est relevé, dans une position sensiblement perpendiculaire à l'élément de paroi 22, pour constituer la paroi arrière du module extensible de la benne. Pour cela, l'élément de paroi relevable 23 du hayon est relié de manière articulée suivant son bord arrière ou inférieur, au bord arrière ou supérieur de l'élément de paroi 22, lui-même monté articulé par son bord avant ou inférieur sur la carrosserie du véhicule, autour de l'axe transversal 18.

Dans un premier temps, on fait pivoter la partie inférieure du hayon 7 vers l'extérieur comme représenté par les flèches 27 et, dans un deuxième temps, on relève le second élément 23 de la partie inférieure du hayon, comme représenté par la flèche 26.

La fermeture des côtés latéraux du module extensible de la benne comportant les éléments de paroi 22 et 23 est assurée par deux éléments de paroi latéraux 25 qui peuvent être constitués par des éléments de cadre permettant la fixation de treillis de fermeture de la surface intérieure des cadres.

Les éléments de paroi latéraux 25 du module extensible de la benne du véhicule automobile dans sa configuration pick-up peuvent être montés coulissants chacun entre une position escamotée à l'intérieur d'une paroi latérale de la partie arrière de la carrosserie du véhicule automobile et une position étendue dans laquelle les éléments de paroi 25 ferment les côtés latéraux de l'élément de paroi 22 constituant le plancher du module extensible de la benne.

L'élément de paroi 23 peut être rabattu à l'horizontale autour de l'axe 24 pour assurer le chargement par l'arrière de la benne du véhicule automobile dans sa configuration pick-up ou relevé et fixé sur les parties d'extrémité postérieures des éléments de paroi 25.

Les éléments de paroi 25 pourraient être également fixés par leur extrémité arrière sur l'élément de paroi 23 et mis en place lorsqu'on effectue le relevage de l'élément de paroi 23, depuis sa position rabattue sur l'élément de paroi 22 jusqu'à sa position relevée à 90°.

Dans tous les cas, le véhicule automobile suivant l'invention permet de passer facilement d'une configuration break à une configuration pick-up, de telle sorte que le véhicule suivant l'invention puisse servir aussi bien pour le transport de passagers ou de charges dans un habitacle entièrement fermé que pour le transport de charges dans une benne ouverte vers le haut et facilement accessible par l'arrière.

Le véhicule automobile suivant l'invention est particulièrement économique du fait de sa polyvalence et peut éviter l'achat d'un second véhicule, pour un utilisateur désirant effectuer des transports sur route à grande distance de charges ou de passagers, dans de bonnes conditions de confort et de protection climatique et des transports purement utilitaires de charges volumineuses, dans une utilisation locale.

## Revendications

1. Véhicule automobile de type break transformable en un véhicule à benne ouverte vers le haut, appelé pick-up, et comportant un habitacle ayant une partie avant (2a) contenant un poste de conduite et au moins un siège avant (12), une partie arrière comportant au moins un siège arrière (3) rabattable de manière à constituer un plancher plat (20) dans la partie arrière de l'habitacle dans sa position rabattue et délimitée par deux parois latérales et un hayon ouvrant (7) à sa partie postérieure ainsi qu'un toit (14) couvrant l'ensemble de l'habitacle (2), **caractérisé par le fait que** :
- le toit (14) de l'habitacle est constitué d'une partie avant fixe (14a) couvrant la partie avant (2a) de l'habitacle (2) et d'une partie arrière mobile (13, 14b) recouvrant la partie arrière (2b) de l'habitacle, à l'arrière du siège avant (12) montée pivotante par une extrémité antérieure, autour d'un axe horizontal (15) de direction transversale situé à l'aplomb d'une partie arrière du siège avant (12), entre une position sensiblement horizontale dans la continuité de la partie avant (14a) dans une première configuration du véhicule et une position sensiblement verticale, à l'arrière du siège avant (12), de manière à séparer la partie avant (2a) de l'habitacle constituant une cabine dans une seconde configuration du véhicule automobile à benne ouverte, de la partie arrière du véhicule, dans sa seconde configuration, et
- une partie supérieure du hayon (7) constituant une vitre arrière est escamotable de manière coulissante à l'intérieur d'une partie inférieure du hayon (7), de manière à constituer une paroi arrière de la benne ouverte vers le haut du véhicule, dans sa seconde configuration.

2. Véhicule automobile suivant la revendication 1, **caractérisé par le fait que** la partie mobile montée pivotante du toit (14) du véhicule automobile comporte une vitre (13) et une partie opaque en tôle (14b), successivement, dans une direction longitudinale du véhicule automobile, de l'avant vers l'arrière, la vitre (13) de la partie mobile du toit (14) constituant une lunette arrière du véhicule dans sa seconde configuration, dans laquelle la vitre (13) est disposée à la partie supérieure de la partie mobile du toit (14) dans sa position verticale.

3. Véhicule automobile suivant l'une quelconque des revendications 1 et 2, **caractérisé par le fait que** les parois latérales délimitant la partie arrière (2b) de l'habitacle du véhicule automobile sont constituées chacune par une porte arrière (5) du véhicule automobile et une custode (6), la porte (5) et la custode (6) comportant dans leur partie supérieure, respectivement, une vitre de portière (5a) et une vitre de custode (6a) escamotables par coulissement dans une partie inférieure de la porte (5) et dans une partie inférieure de la custode (6), respectivement, la vitre de portière (5a) et la vitre de custode (6a) étant escamotées dans la seconde configuration du véhicule automobile.

4. Véhicule suivant la revendication 3, **caractérisé par le fait qu'**il ne comporte pas de montant vertical, entre la portière arrière (5) et la custode (6), sur chacune de ses parois latérales.

5. Véhicule automobile suivant l'une quelconque des revendications 1 à 4, **caractérisé par le fait que** le hayon ouvrant (7) comporte, à son extrémité supérieure, un premier ensemble d'articulation, autour d'un axe transversal horizontal (9) sur la carrosserie du véhicule automobile et, suivant le bord inférieur de sa partie inférieure, de direction transversale horizontale, un second ensemble d'articulation autour d'un second axe de pivotement (18), le premier ensemble de pivotement autour du premier axe de pivotement (9) pouvant être mis en service dans la première configuration du véhicule automobile et le second ensemble de pivotement autour du second axe de pivotement (18) pouvant être mis en service dans la seconde configuration du véhicule automobile.

6. Véhicule automobile suivant l'une quelconque des revendications 1 à 5, **caractérisé par le fait que** le hayon ouvrant (7) comporte, dans sa partie supérieure, un becquet (8) solidaire du bord supérieur horizontal de la vitre arrière (7a).

7. Véhicule automobile suivant l'une quelconque des revendications 1 à 6, **caractérisé par le fait qu'**il comporte un feu de stop (21) dans une partie centrale d'un bord avant ou supérieur horizontal de la partie mobile (13, 14b) du toit (14) servant de troisième feu de stop dans la seconde configuration du véhicule automobile.

8. Véhicule automobile suivant la revendication 5, **caractérisé par le fait que** la partie inférieure du hayon ouvrant (7) comporte un premier élément de paroi plane (22) et un second élément de paroi plane (23) mobiles l'un par rapport à l'autre entre une position rabattue l'un sur l'autre pour constituer la partie inférieure du hayon (7) et une position pivotée vers le haut à 90° du second élément de paroi (23) par rapport au premier élément de paroi (22), autour d'un axe horizontal de direction transversale (24), le premier élément de paroi (22) étant monté articulé autour de l'axe d'articulation (18) de la partie inférieure du hayon arrière (7) du véhicule automobile dans la seconde configuration et le second élément de paroi (23) étant monté articulé autour du second axe d'articulation horizontal de direction transversale (24), par un bord d'extrémité arrière ou inférieur sur un bord d'extrémité arrière ou supérieur du premier élément de paroi (22).

9. Véhicule automobile suivant la revendication 8, **caractérisé par le fait qu'**il comporte de plus deux parois latérales (25) de fermeture d'un module extensible de la benne ouverte vers le haut du véhicule automobile dans sa seconde configuration constitué par le premier élément de paroi (22) et le second élément de paroi (23) pivoté vers le haut sensiblement à 90° par rapport au premier élément de paroi (22), les éléments de parois latérales (25) étant mobiles entre une position escamotée dans la carrosserie du véhicule automobile et une position étendue de fermeture des parois latérales du module extensible constitué par le premier et le second éléments de paroi (22, 23).

## Patentansprüche

1. Kraftfahrzeug von der Art eines Kombis, das sich in ein Pritschenwagen genanntes Fahrzeug mit einem nach oben offenen Kasten verwandeln lässt und eine Fahrgastzelle mit einem vorderen Abschnitt (2a) umfasst, der einen Fahrerstand und mindestens einen Vordersitz (12) enthält, einen hinteren Abschnitt, der mindestens einen Rücksitz (3) umfasst, der umlegbar ist, um im hinteren Abschnitt der Fahrgastzelle in seiner umgelegten Stellung einen ebenen Boden (20) zu bilden, und von zwei Seitenwänden und einer Heckklappe (7), die sich an seinem hinteren Teil öffnet, sowie einem Dach (14) begrenzt ist, das die gesamte Fahrgastzelle (2) bedeckt,
**dadurch gekennzeichnet, dass**
- das Dach (14) der Fahrgastzelle aus einem feststehenden vorderen Teil (14a) besteht, das den vorderen Abschnitt (2a) der Fahrgastzelle (2) bedeckt, und aus einem beweglichen hinteren Teil (13, 14b), das den hinteren Abschnitt (2b) der Fahrgastzelle hinter dem Vordersitz (12) überdeckt und durch ein vorderes Ende schwenkbar um eine quer verlaufende horizontale Achse (15) angebracht ist, die sich in der Senkrechten eines hinteren Teils des Vordersitzes (12) befindet, zwischen einer im Wesentlichen horizontalen Stellung in der Verlängerung des vorderen Teils (14a) in einer ersten Konfiguration des Fahrzeugs und einer im Wesentlichen vertikalen Stellung hinter dem Vordersitz (12), um den vorderen Abschnitt (2a) der Fahrgastzelle abzutrennen, der in einer zweiten Konfiguration des Kraftfahrzeugs mit offenem Kasten des hinteren Abschnitts des Fahrzeugs in seiner zweiten Konfiguration eine Kabine darstellt, und
- ein oberer Teil der Heckklappe (7), der eine Heckscheibe darstellt, gleitbar im Inneren eines unteren Teils der Heckklappe (7) versenkbar ist, um eine hintere Wand für den nach oben offenen Kasten des Fahrzeugs in seiner zweiten Konfiguration zu bilden.

2. Kraftfahrzeug nach Anspruch 2,
**dadurch gekennzeichnet, dass**
das bewegliche, schwenkbar angebrachte Teil des Dachs (14) des Kraftfahrzeugs eine Scheibe (13) und ein lichtundurchlässiges Teil (14b) aus Blech aufeinander folgend in einer Längsrichtung des Kraftfahrzeugs von vorn nach hinten umfasst, wobei die Scheibe (13) des beweglichen Teils des Dachs (14) eine Sichtöffnung des Fahrzeugs in seiner zweiten Konfiguration bildet, wobei die Scheibe (13) im oberen Abschnitt des beweglichen Teils des Dachs (14) in seiner vertikalen Stellung angeordnet ist.

3. Kraftfahrzeug nach einem der Ansprüche 1 und 2,
**dadurch gekennzeichnet, dass**
die Seitenwände, die den hinteren Abschnitt (2b) der Fahrgastzelle des Kraftfahrzeugs begrenzen, jeweils aus einer hinteren Tür (5) des Kraftfahrzeugs und einem über dem Hinterrad befindlichen Karosserieteil (6) bestehen, wobei die Tür (5) und das Karosserieteil (6) in ihrem oberen Teil jeweils ein Türfenster (5a) und ein Karosserieteilfenster (6a) umfassen, die durch eine Gleitbewegung in einem unteren Teil der Tür (5) und einem unteren Teil des Karosserieteils (6) versenkbar sind, wobei das Türfenster (5a) und das Karosserieteilfenster (6a) in der zweiten Konfiguration des Kraftfahrzeugs versenkt sind.

4. Kraftfahrzeug nach Anspruch 3,
**dadurch gekennzeichnet, dass**
es an keiner seiner Seitenwände eine vertikale Säule zwischen der hinteren Tür (5) und dem Karosserieteil (6) umfasst.

5. Kraftfahrzeug nach einem der Ansprüche 1 bis 4,
**dadurch gekennzeichnet, dass**
die sich öffnende Heckklappe (7) an ihrem oberen Ende eine erste Einheit zur Anlenkung um eine horizontale Querachse (9) an der Karosserie des Kraftfahrzeugs, und entlang des unteren Rands ihres unteren Teils in horizontaler Querrichtung eine zweite Einheit zur Anlenkung um eine zweite Schwenkachse (18) umfasst, wobei die erste Einheit zum Schwenken um die erste Schwenkachse (9) in der ersten Konfiguration des Kraftfahrzeugs in Betrieb genommen werden kann, und die zweite Einheit zum Schwenken um die zweite Schwenkachse (18) in der zweiten Konfiguration des Kraftfahrzeugs in Betrieb genommen werden kann.

6. Kraftfahrzeug nach einem der Ansprüche 1 bis 5,
**dadurch gekennzeichnet, dass**
die sich öffnende Heckklappe (7) in ihrem oberen Teil einen Spoiler (8) umfasst, der mit dem oberen horizontalen Rand der Heckscheibe (7a) fest verbunden ist.

7. Kraftfahrzeug nach einem der Ansprüche 1 bis 6, **dadurch gekennzeichnet, dass** es eine Bremsleuchte (21) in einem mittleren Teil eines vorderen oder oberen horizontalen Rands des beweglichen Teils (13, 14b) des Dachs (14) umfasst, die in der zweiten Konfiguration des Kraftfahrzeugs als dritte Bremsleuchte dient.

8. Kraftfahrzeug nach Anspruch 5,
**dadurch gekennzeichnet, dass**
das untere Teil der sich öffnenden Heckklappe (7) ein erstes ebenes Wandelement (22) und ein zweites ebenes Wandelement (23) umfasst, die in Bezug aufeinander zwischen einer übereinander geklappten Stellung, um den unteren Teil der Heckklappe (7) zu bilden, und einer gegenüber dem ersten Wandelement (22) um eine quer verlaufende horizontale Achse (24) um 90° nach oben geschwenkten Position des zweiten Wandelements (23) beweglich sind, wobei das erste Wandelement (22) um die Anlenkachse (18) des unteren Teils der Heckklappe (7) des Kraftfahrzeugs in seiner zweiten Konfiguration angelenkt angebracht ist, und wobei das zweite Wandelement (23) an der quer verlaufenden horizontalen Anlenkachse (24) mit einem hinteren oder unteren Endrand an einem hinteren oder oberen Endrand des ersten Wandelements (22) angelenkt angebracht ist.

9. Kraftfahrzeug nach Anspruch 8,
**dadurch gekennzeichnet, dass**
es darüber hinaus zwei Seitenwände (25) zum Verschließen eines ausziehbaren Moduls des nach oben offenen Kastens des Kraftfahrzeugs in seiner zweiten Konfiguration umfasst, das aus dem ersten Wandelement (22) und dem zweiten Wandelement (23) besteht, das im Wesentlichen um 90° gegenüber dem ersten Wandelement (22) nach oben geschwenkt ist, wobei die Seitenwandelemente (25) zwischen einer in der Karosserie des Fahrzeugs versenkten Stellung und einer ausgefahrenen Stellung zum Verschließen der Seitenwände des ausziehbaren Moduls beweglich sind, das aus dem ersten und zweiten Wandelement (22, 23) besteht.

## Claims

1. Motor vehicle of the estate car type which can be converted into a vehicle having an upwardly open compartment, referred to as a pick-up, and which comprises a passenger compartment having a front portion (2a) which contains a driving station and at least one front seat (12), a-rear portion which comprises at least one rear seat (3) which can be folded down so as to constitute a flat floor (20) in the rear portion of the passenger compartment in the folded position thereof and which is delimited by two lateral walls and an opening rear door (7) at the rear portion thereof and a roof (14) which covers the whole of the passenger compartment (2), **characterised in that**:
- the roof (14) of the passenger compartment is constituted by a front fixed portion (14a) which covers the front portion (2a) of the passenger compartment (2) and a movable rear portion (13, 14b) which covers the rear portion (2b) of the passenger compartment, at the rear of the front seat (12), and which is mounted so as to pivot by means of a front end, about a horizontal axis (15) having a transverse direction and being located perpendicularly relative to a rear portion of the front seat (12), between a substantially horizontal position in a continuation of the front portion (14a) in a first configuration of the vehicle and a substantially vertical position, at the rear of the front seat (12), so as to separate the front portion (2a) of the passenger compartment which constitutes a cabin in a second configuration of the pick-up motor vehicle, from the rear portion of the vehicle, in the second configuration thereof, and
- an upper portion of the rear door (7) which constitutes a rear window can be retracted in a sliding manner inside a lower portion of the rear door (7) so as to constitute a rear wall of the upwardly open compartment of the vehicle, in the second configuration thereof.

2. Motor vehicle according to claim 1, **characterised in that** the pivotably mounted movable portion of the roof (14) of the motor vehicle comprises a window (13) and an opaque portion (14b) of sheet metal, successively, in a longitudinal direction of the motor vehicle, from the front towards the rear, the window (13) of the movable portion of the roof (14) constituting a rear window of the vehicle in the second configuration thereof, in which the window (13) is arranged at the upper portion of the movable portion of the roof (14) in the vertical position thereof.

3. Motor vehicle according to either claim 1 or claim 2, **characterised in that** the lateral walls which delimit the rear portion (2b) of the passenger compartment of the motor vehicle are each constituted by a rear door (5) of the motor vehicle and a rear side panel (6), the door (5) and the rear side panel (6) comprising, in the upper portion thereof, a door window (5a) and a rear side panel window (6a), respectively, which can be retracted by being slid into a lower portion of the door (5) and a lower portion of the rear side panel (6), respectively, the door window (5a) and the rear side panel window (6a) being retracted in the second configuration of the motor vehicle.

4. Vehicle according to claim 3, **characterised in that** it does not comprise any vertical pillar, between the rear door (5) and the rear side panel (6), at each of the lateral walls thereof.

5. Motor vehicle according to any one of claims 1 to 4, **characterised in that** the opening rear door (7) comprises, at the upper end thereof, a first assembly for articulation, about a horizontal transverse axis (9), to the body of the motor vehicle and, along the lower edge of the lower portion thereof, having a horizontal transverse direction, a second articulation assembly about a second pivot axis (18), the first assembly for pivoting about the first pivot axis (9) being able to be used in the first configuration of the motor vehicle and the second assembly for pivoting about the second pivot axis (18) being able to be used in the second configuration of the motor vehicle.

6. Motor vehicle according to any one of claims 1 to 5, **characterised in that** the opening rear door (7) comprises, in the rear portion thereof, a tapering member (8) which is fixedly joined to the horizontal upper edge of the rear window (7a).

7. Motor vehicle according to any one of claims 1 to 6, **characterised in that** it comprises a stop light (21) in a central portion of a front edge or horizontal upper edge of the movable portion (13, 14b) of the roof (14) which acts as a third stop light in the second configuration of the motor vehicle.

8. Motor vehicle according to claim 5, **characterised in that** the lower portion of the opening rear door (7) comprises a first planar wall element (22) and a second planar wall element (23) which are movable relative to each other between a position in which one is folded on the other in order to constitute the lower portion of the rear door (7) and a position in which the second wall element (23) is pivoted upwards through 90° relative to the first wall element (22), about a horizontal axis (24) having a transverse direction, the first wall element (22) being mounted so as to be articulated about the articulation axis (18) of the lower portion of the rear door (7) of the motor vehicle in the second configuration and the second wall element (23) being mounted so as to be articulated about the second horizontal articulation axis (24) having a transverse direction, at a rear or lower end edge, to a rear or upper end edge of the first wall element (22).

9. Motor vehicle according to claim 8, **characterised in that** it further comprises two lateral walls (25) for closing an extensible module of the upwardly open compartment of the motor vehicle in the second configuration thereof, which module is constituted by the first wall element (22) and the second wall element (23) which is pivoted upwards substantially through 90° relative to the first wall element (22), the elements of lateral walls (25) being movable between a position retracted in the body of the motor vehicle and an extended position for closing the lateral walls of the extensible module which is constituted by the first and the second wall elements (22, 23).
